(19) Europäisches Patentamt / European Patent Office / Office européen des brevets

(11) **EP 4 763 947 A1**

(12) **EUROPEAN PATENT APPLICATION**

(43) Date of publication:
24.06.2026 Bulletin 2026/26

(21) Application number: 24221270.2

(22) Date of filing: **18.12.2024**

(51) International Patent Classification (IPC):
*C09K 11/08* (2006.01)   *G01N 21/64* (2006.01)

(52) Cooperative Patent Classification (CPC):
C09K 11/08; G01N 21/6408

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Hilti Aktiengesellschaft**
**9494 Schaan (LI)**

(72) Inventors:
• **Roth, Peter**
**9472 Grabs (CH)**
• **Clausi, Donato**
**4144 Arlesheim (CH)**

(74) Representative: **Hilti Aktiengesellschaft**
**Corporate Intellectual Property**
**Feldkircherstrasse 100**
**Postfach 333**
**9494 Schaan (LI)**

(54) **LUMINESCENT MATERIAL FOR IDENTIFICATION OF CONSTRUCTION PRODUCTS**

(57) Luminescent material for identification of construction products comprising a mix of
- a first luminescent pigment and at least a second luminescent pigment,
- wherein the first luminescent pigment having a first emission intensity comprising a first initial emission intensity and a first decay time constant,
- wherein the at least second luminescent pigment having a second emission intensity comprising a second initial emission intensity and a second decay time constant,
- at least one mix ratio of the first luminescent pigment and the at least second luminescent pigment,
- wherein the at least one mix ratio having a combined emission intensity comprising a combined initial emission intensity and a combined decay time constant,
- wherein the combined decay time constant is time dependent.

Fig. 3

## Description

The present invention relates to a luminescent material for identification of construction products, a construction product comprising said luminescent material, a working tool configured for identification of construction products and a method for identifying construction products.

## Background

Fluorescent effects are widely used to authenticate and identify documents or other objects. Often, the characteristic emission of light from a marker substance which is used at a different wavelength than the exciting light is made use of to authenticate an object.

All fluorescent processes depend on an (optically) excitable material where the absorption of incident photons lead to electrons being lifted to higher energy states inside a crystal lattice, molecule, atom or ion. With a characteristic average delay, the excited electrons drop to a lower, stabler energy level while releasing the differential energy in a combination of radiant (light emission) or non-radiant (thermal) processes. Consequently, after the end of an exciting light pulse, the intensity of emitted fluorescent radiation decays rapidly, in many cases essentially governed by a first order exponential law.

US9046486 BB discloses a security feature which is created by combining two luminescent materials with different decay characteristics, making it difficult to replicate or counterfeit. The ratio of the decay constants of the materials is carefully chosen to ensure that the combined emissions appear as a single decay constant, fooling simple measuring devices. By measuring the decay signal of the combined emissions, the specific combination of materials and their ratios can be decoded, providing a way to authenticate the article and ensure its security.

## Summary of the Invention

An object of the present invention is to overcome at least one of the disadvantages of the prior art. It is further an object of the present invention to provide a luminescent material for identification of construction products which enables a faster and more secure identification of a construction product such that a construction product is used with performance matching and safe working parameters.

At least one of these objects has been solved by the features of the independent patent claims. Other preferred embodiments are indicated in the dependent claims.

In a first aspect the invention comprises a luminescent material for identification of construction products comprising a mix of

- a first luminescent pigment and at least a second luminescent pigment,

  - wherein the first luminescent pigment having a first emission intensity comprising a first initial emission intensity and a first decay time constant,
  - wherein the at least second luminescent pigment having a second emission intensity comprising a second initial emission intensity and a second decay time constant,

- at least one mix ratio of the first luminescent pigment and the at least second luminescent pigment,

  - wherein the at least one mix ratio having a combined emission intensity comprising a combined initial emission intensity and a combined decay time constant,
  - wherein the combined decay time constant is time dependent.

The term "luminescent material" comprises a material with at least two different pigments or two specific chemical compounds. In general, a luminescent material can emit light when exposed to a light excitation. The luminescent material emits light when exposed to certain types of electromagnetic radiation, e.g. infrared (IR) light or ultraviolet (UV) light.

The term "a first luminescent pigment" comprises a first specific chemical component of the luminescent material. The first luminescent pigment can be a base pigment comprising only the first specific chemical component. The term "at least a second luminescent pigment" comprises at least a second specific chemical component of the luminescent material. In other words, within the scope of this invention, a luminescent material comprises always at least two luminescent pigments or two specific chemical compounds. The at least second luminescent pigment can be a base pigment comprising only the second specific chemical component. The luminescent material can also comprise three, four, five or even more luminescent pigments.

The term "first emission intensity" comprises a luminous intensity of the first - not mixed - base pigment. The first emission intensity can be described by a time-dependent curve. After the first base pigment is exposed to a light excitation, it emits luminescent light with a luminous intensity. Said first emission intensity changes over time.

The term "first initial emission intensity" comprises the value which the first emission intensity of the first luminescent pigment reaches at the beginning of the decay and/or at the end of the excitation.

The term "first decay time constant" can be computed as the negative inverse of the gradient of the first emission intensity. Plotted in a log-lin diagram, the first decay time constant can follow an inclined linear curve or can follow a non-linear curve.

The term "second emission intensity" comprises a luminous intensity of the second - not mixed - base pigment. The second emission intensity can be described by a time-dependent curve. After the second base pigment is exposed to a light excitation, it emits luminescent light with a luminous intensity. Said second emission intensity changes over time.

The term "second initial emission intensity" comprises the value which the second emission intensity reaches at the beginning of the decay and/or at the end of the excitation.

The term "second decay time constant" can be computed as the negative inverse of the gradient of the second emission intensity. Plotted in a log-lin diagram, the second decay time constant can follow an inclined linear curve or can follow a non-linear curve.

The term "at least one mix ratio" comprises at least a mix of the first luminescent pigment and the at least second luminescent pigment. It is important to note that the luminescent material can comprise more than one mix ratio. The luminescent material can also comprise three, four, five, six, seven, eight, nine or even more luminescent mix ratios. For example, a first mix ratio of the luminescent material can comprise 10% of the first luminescent pigment and 90% of the at least second luminescent pigment. A second mix ratio of the luminescent material can comprise 80% of the first luminescent pigment and 20% of the at least second luminescent pigment.

The term "combined emission intensity" comprises a luminous intensity of the at least one mix ratio of the first luminescent pigment and the at least second luminescent pigment. The combined emission intensity can be described by a time-dependent curve. After the luminescent material is exposed to a light excitation it emits luminescent light with a luminous intensity. Said combined emission intensity changes over time.

The term "combined decay time constant" can be computed as the negative inverse of the local gradient of the combined emission intensity at a defined point in time. Said combined decay time constant is the constant of an approximated standard exponential function fitted to the combined emission intensity at a defined point in time.

Plotted in a log-lin diagram, the combined emission intensity follows a non-linear curve. In other words, the combined decay time constant changes over time.

At least one technical effect of the first aspect is that due to the specific combined decay time constant of every possible mix ratio an identification of every possible mix ratio is enabled. Hence, said luminescent material can be used for the identification of construction products and it is ensured that these construction products may be used with performance matching and safe working parameters. In other words, due to the specific identification of the luminescent material in a construction product, the safety of the user is significantly enhanced, because the user is not able to use the construction product with non-appropriate and unsafe working parameters.

In a further embodiment, the luminescent material is characterized by that the first emission intensity and the second emission intensity are each described by an exponential function:

$$I(t) = I_0 \cdot e^{-(t/\tau)^{\beta}}$$

- wherein $I_0$ is an initial emission intensity, preferably the first initial emission intensity or the second initial emission intensity,
- wherein $t$ is the time,
- wherein $\tau$ is a decay time constant, preferably the first decay time constant or the second decay time constant,
- wherein $\beta$ is a stretching exponent, preferably a first stretching constant $\beta_1$ related to the first luminescent pigment or a second stretching constant $\beta_2$ related to the second luminescent pigment.

The term "initial emission intensity" is the generic term for the first initial emission intensity and every other available emission intensity of a at least second luminescent pigment. For example, if a luminescent material comprises two luminescent pigments than, the term "initial emission intensity" comprises the first initial emission intensity and the second initial emission intensity. If a luminescent material comprises three luminescent pigments, then the term "initial emission intensity" comprises the first initial emission intensity, the second initial emission intensity and the third initial emission intensity.

The term "decay time constant" is the generic term for the first decay time constant and every other available decay time constant of a at least second luminescent pigment. For example, if a luminescent material comprises two luminescent pigments, then the term "decay time constant" comprises the first decay time constant and the second decay time constant. If a luminescent material comprises three luminescent pigments, then the term "decay time constant" comprises the first decay time constant, the second decay time constant and the third decay time constant.

The term "stretching exponent" refers to a parameter that modifies a standard exponential function to describe a broader range of decay behaviors.

At least one technical effect of this further embodiment is that a slower decay of the luminous intensity of a luminescent material compared to a standard exponential decay can be realized. This leads to specific combined emission intensity, which ensures that these construction products may be used with performance matching and safe working parameters. In other words, due to the specific identification of the luminescent material in a construction product, the safety of the user is significantly enhanced, because the user is not able to use the construction product with non-appropriate and unsafe working parameters.

In a further embodiment, the luminescent material comprises a stretching exponent β having at least one value between 0.7 and 1.0 and/or at least one value between 0.7 and 0.99.

The term "the stretching exponent β having at least one value" describes that one luminescent material can comprise more than one stretching exponent β. For example, if a luminescent material comprises two luminescent pigments, then, the first luminescent pigment can have a first stretching exponent $β_1$=1.0 and the at least second luminescent pigment can have a second stretching exponent $β_2$=0.9. In this case, the first luminescent pigment comprises a standard exponential decay behavior and the at least second luminescent pigment comprises a stretched-exponential decay behavior. In another example, if a luminescent material comprises two luminescent pigments, then the first luminescent pigment can have a first stretching exponent $β_1$=0.9 and the at least second luminescent pigment can have a second stretching exponent $β_2$=0.8. In this case the first stretching luminescent pigment comprises a stretched-exponential decay behavior and the at least second luminescent pigment comprises a stretched-exponential decay behavior. It is also possible that the first luminescent pigment and the second luminescent pigment have the same stretching exponent β.

In an optional embodiment, the luminescent material comprises a stretching exponent β having at least one value out of the following ranges:

    i. 0.7 and 0.98,
    ii. 0.7 and 0.97,
    iii. 0.7 and 0.96,
    iv. 0.8 and 0.95,
    v. 0.81 and 0.94,
    vi. 0.82 and 0.93,
    vii. 0.83 and 0.92,
    viii. 0.84 and 0.91,
    ix. 0.85 and 0.90,
    x. 0.86 and 0.89.

At least one technical effect of this further embodiment is that luminescent pigments with different decay behaviors can be combined. This leads to specific combined emission intensity, which ensures that these construction products may be used with performance matching and safe working parameters. In other words, due to the specific identification of the luminescent material in a construction product, the safety of the user is significantly enhanced, because the user is not able to use the construction product with non-appropriate and unsafe working parameters.

In a further embodiment, the luminescent material comprises at least one mix ratio having a first combined decay time constant at a at least first identification time.

In an optional embodiment, the luminescent material comprises at least one mix ratio having a first combined decay time constant at exactly a first identification time.

The term "having a first combined decay time constant at a at least first identification time" and/or the term "having a first combined decay time constant at exactly a first identification time" describes the fact that at a (at least) first identification time of the combined decay time constant of the luminescent material is determined. Determination can be done by measuring, calculating, approximating or estimating.

The term "first identification time" describes a point in time after the excitation of the luminescent material has ceased, when the combined emission intensity of the luminescent material is determined for the first time. Preferably, the first identification time describes a point in time, when the decay of the combined emission intensity is recognizable, after the detector has recovered from any optical saturation.

At least one technical effect of this further embodiment is that having a combined decay time constant at least or exactly at a first identification time, leads to the detection that the mix of different luminescent pigments comprises different decay time constants. In other words: It is possible to detect a known luminescent material or a known luminescent pigment.

In a further embodiment, the luminescent material comprises at least one mix ratio having a first combined decay time constant at a first identification time and a second combined decay time constant at a at least second identification time.

In an optional embodiment, the luminescent material comprises at least one mix ratio having a first combined decay time constant at exactly a first identification time and a second combined decay time constant at exactly a second identification time.

The term "having a second combined decay time constant at a at least second identification time" and/or the term "having a second combined decay time constant at exactly a second identification time" describes the fact that at a (at least) second identification time of the combined decay time constant of the luminescent material is determined a second time. Determination can be done by measuring, calculating, approximating or estimating.

The term "second identification time" describes a point in time after the end of the excitation of the luminescent material, when the combined emission intensity of the luminescent material is determined for the second time. Preferably, the second identification time describes a point in time, when the decay of the combined emission intensity is already recognizable. Preferably, the second identification time is chosen to be after the first identification time.

At least one technical effect of this further embodiment is having a different combined decay time constant at a first identification time and at a at least second identification time, leads to the detection that a mix of different luminescent pigments is used or that at least one luminescent pigment of the luminescent material comprises a stretched-exponential decay behavior.

In a further embodiment, the luminescent material comprises at least one mix ratio having a first combined decay time constant at a first identification time, a second combined decay time constant at a second identification time and a third combined decay time constant at a at least third identification time.

In an optional embodiment, the luminescent material comprises at least one mix ratio having a first combined decay time constant at a first identification time, a second combined decay time constant at a second identification time and a third combined decay time constant at exactly a third identification time.

The term "having a third combined decay time constant at a at least third identification time" and/or the term "having a third combined decay time constant at exactly a third identification time" describes the fact that at a (at least) third identification time of the combined decay time constant of the luminescent material is determined a third time. Determination can be done by measuring, calculating, approximating or estimating.

The term "third identification time" describes a point in time after the end of the excitation of the luminescent material, when the combined emission intensity of the luminescent material is determined for the third time. Preferably, the third identification time describes a point in time when the decay of the combined emission intensity is already recognizable. The third identification time is chosen to be after the first identification time and/or the second identification time.

At least one technical effect of this further embodiment is having different combined decay time constants at a first identification time, at a second identification time and at least at a third identification time, leads to the detection that a mix of different luminescent pigments is used and that at least one luminescent pigment of the luminescent material comprises a stretched-exponential decay behavior.

In a second aspect, the invention comprises a construction product comprising a luminescent material according to one of the embodiments of the first aspect of this invention.

The term "construction product" refers to any physically available object which can be used with, by or without a working tool. A construction product can be a consumable which is only used once (e.g. a nail in a setting device) and/or a construction product can be an accessory which can be used more than once (e.g. a drill bit in a drill).

At least one technical effect of this second aspect is that said luminescent material can be used for the identification of construction products and it is ensured that these construction products may be used with performance matching and safe working parameters within a working tool. In other words, due to the specific identification of the luminescent material in a construction product, the safety of the user is significantly enhanced, because the user is not able to use the construction product with non-appropriate and/or unsafe working parameters.

In a further embodiment, the construction product is at least one of the following:

    a. a strip of collated nails or a single nail,
    b. a strip of collated screws or a single screw,
    c. a strip of collated threaded stud or a single threaded stud,
    d. a single or collated cartridge for a powder actuated tool,
    e. an exchangeable battery,
    f. a gas can,
    g. a welding stud,
    h. an insert tool for a working tool, preferably a screw bit, a drill bit, a core bit or a saw blade,
    i. a chemical product, preferably a mortar or a component of a chemical anchor,
    j. a fire protection product, preferably a firestop foam or a fire-resistant brick,
    k. a mechanical anchor.

In a further aspect, the invention comprises a working tool configured for identification of construction products, comprising an identification system, wherein said identification system comprising

- at least one light source for emitting modulated light on a luminescent material and exciting said luminescent material,
- a detector comprising a photodetector for receiving and transforming an optical signal of a fluorescent light of the luminescent material into an electric signal.

The term "identification system" refers to a subpart of the working tool, which enables the working to tool to detect if a suitable construction product is used with or by the working tool.

The term "modulated light" refers to the alteration of certain properties of light. Preferably, modulated light in the context of this invention refers to pulsed light or a sinusoidal light signal. The term "modulated light" further comprises amplitude modulation, phase modulation, and polarization modulation.

At least one technical effect of this further aspect is that the working tool identifies if a suitable construction product is used or not. If the construction product is suitable, the identification system of the working tool enables the user to use the construction product with or by the working tool and if applicable, with correct working parameters. If the construction product is not suitable, the identification system of the working tool can warn the user to use the construction product with or by the working tool. In other words, due to the identification system of the working tool, the safety of the user is significantly enhanced.

In a further embodiment, the modulated light of the light source and/or the fluorescent light of the luminescent material having a wavelength between 400 nm and 2500 nm.

In an optional embodiment, the modulated light of the light source and/or the fluorescent light of the luminescent material having at least one wavelength range out of the following:

    i. 800 nm to 1100 nm,
    ii. 900 nm to 1000 nm,
    iii. 920 nm to 980 nm,
    iv. 940 nm to 960 nm,
    v. 400 nm to 500 nm,
    vi. 500 nm to 600 nm,
    vii. 600 nm to 700 nm,
    viii. 700 nm to 800 nm,
    ix. 800 nm to 900 nm,
    x. 900 nm to 1000 nm,
    xi. 1000 nm to 1100 nm,
    xii. 1100 nm to 1200 nm,
    xiii. 1200 nm to 1300 nm,
    xiv. 1300 nm to 1400 nm,
    xv. 1400 nm to 1500 nm.

The term "wavelength" in the context of the light source can describe a dominant wavelength, which refers to the wavelength of monochromatic light that best represents the hue of a color when mixed with white light. For example, LEDs emit a mixture of wavelengths, meaning they do not produce light at a single, sharp wavelength. Instead, their light is spread across a range of wavelengths. In contrast, a laser emits light at a single, specific wavelength, making the emission spectrally sharp.

In a further embodiment, the working tool further comprises a temperature sensor essentially adjacent to a construction material comprising or marked with the luminescent material.

The term "essentially adjacent to the luminescent material" can describe that the temperature sensor is placed adjacent to the luminescent material, this results in an accurate temperature measurement. Alternatively, the term "essentially adjacent to the luminescent material" can describe that the temperature sensor is placed on a printed circuit board, which is placed adjacent to the luminescent material. The term "essentially" implies that a temperature estimation of the luminescent material is possible due to the position of the temperature sensor.

At least one technical effect of this further embodiment is that a temperature-based change in emission behavior of the luminescent material can be accounted for the use of the temperature sensor.

In a further aspect, the invention comprises a method for identifying construction products, comprising the steps of:

- emitting modulated light by a light source on a luminescent material,
- emitting a fluorescent light signal by the luminescent material,
- measuring the fluorescent light signal of the luminescent material,
- determining at a at least first identification time a first combined decay time constant of the fluorescent light signal,
- comparing the first combined decay time constant with a first combined target decay time constant.

The term "determining" describes the step of measuring and/or calculating and/or approximating and/or estimating.

The term "combined target decay time constant" describes a known combined decay time constant of a specific luminescent material. This combined target decay time constant must be determined, before the method for identifying construction products can be conducted.

At least one technical effect of this further aspect is that having a combined decay time constant at least at a first identification time, leads to the detection that the mix of different luminescent pigments comprises different decay time constants. In other words: It is possible to detect a known luminescent material or a known luminescent pigment. Hence, said luminescent material can be used for the identification of construction products and it is ensured that only compatible construction products may be used with a corresponding working tool. In other words, due to the specific identification of the luminescent material in a construction product, the safety of the user is significantly enhanced, because the user is not able to use non-appropriate construction product.

In a further embodiment, the method comprising further the steps of

- determining at a at least second identification time, a at least second combined decay time constant of the fluorescent optical signal and,
- comparing the at least second combined decay time constant with a at least second combined target decay time constant.

At least one technical effect of this further embodiment leads to the detection that a mix of different luminescent pigments is used or that at least one luminescent pigment of the luminescent material comprises a stretched-exponential decay behavior.

In a further embodiment, the method comprising a further step of:

- compensating an electric signal of an amplifier by considering a background light signal, wherein the electrical signal of the amplifier is related to the fluorescent light signal.

The term "compensating" describes a step within the method in which an electric signal is adjusted in such a way that the influence of a background light on the method is compensated or reduced to a level which can be neglected. The term "compensating" further refers to the terms "calibrating", "adjusting", "changing" or "amending".

The term "electric signal of an amplifier" can refer to an output voltage of the amplifier and can have a fixed value between the positive and negative supply voltage of the amplifier (e.g. -15V and 15V). The compensating step can occur before the step of: emitting modulated light by a light source on a luminescent material.

At least one technical effect of this further embodiment is that the method can be used in every environment independently of the background light.

In a further embodiment, the method comprising the further step of:

- correcting the first combined target decay time constant by considering a known temperature dependency.

The term "correcting the first combined decay time constant of the fluorescent light signal by considering a known temperature dependency" describes a situation if the temperature dependency of the first combined decay time constant for the luminescent material is known. In this case the first combined decay time constant will be adjusted based on the known temperature dependency.

The term "correcting" describes a step within the method in which a combined decay time constant is adjusted in such a way that the influence of a temperature change on the method is compensated or can be neglected. The term "compensating" further refers to the terms "calibrating", "adjusting", "changing" or "amending".

At least one technical effect of this further embodiment is that the method can be used in every environment independently of the temperature.

Further optional embodiments follow which can be combined or specified as desired with all previous embodiments of the first and second aspect and also with all further optional embodiments of the first, second, third and fourth aspect.

In a further optional embodiment, the first decay time constant is less than the second decay time constant.

At least one technical effect of this further optional embodiment is that the luminescent material comprises a fast luminescent pigment with a low first decay time constant and a slow luminescent pigment with a high second decay time constant.

In a further optional embodiment, the first initial emission intensity is greater than the second initial emission intensity or the first initial emission intensity is less than the second initial emission intensity or the first emission intensity is equal to the second initial emission intensity.

At least one technical effect of this further optional embodiment is that the luminescent material comprises different initial emission intensities.

In a further optional embodiment, the first initial emission intensity has a first stretching exponent $\beta_1$ and the second initial emission intensity has a second stretching exponent $\beta_2$.

In a further optional embodiment, the first stretching exponent $\beta_1$ and the second stretching exponent $\beta_2$ have the same value or a different value.

At least one technical effect of this further optional embodiment is that the luminescent pigments have a different decay behavior or the same decay behavior.

In a further optional embodiment, the first decay time constant and/or the second decay time constant is temperature dependent.

In a further optional embodiment, the first stretching exponent $\beta_1$ and/or the second stretching exponent $\beta_2$ is temperature dependent.

In a further optional embodiment, the first decay time constant and the second decay time constant having a value out of at least one of the following ranges

    i. 50 $\mu$s and 1000 $\mu$s,
    ii. 100 $\mu$s and 950 $\mu$s,
    iii. 150 $\mu$s and 900 $\mu$s,
    iv. 200 $\mu$s and 850 $\mu$s,
    v. 250 $\mu$s and 800 $\mu$s,
    vi. 300 $\mu$s and 750 $\mu$s,
    vii. 350 $\mu$s and 700 $\mu$s,
    viii. 400 $\mu$s and 650 $\mu$s,
    ix. 450 $\mu$s and 600 $\mu$s,
    x. 500 $\mu$s and 550 $\mu$s.

At least one technical effect of this further optional embodiment is that the luminescent pigments have a different decay behavior. This leads to different unique luminescent materials which can be dominated by a fast luminescent pigment or by a slow luminescent pigment.

In a further optional embodiment, the at least one mix ratio is one out of the following:

    i. 90% of the first luminescent pigment and 10% of the at least second luminescent pigment,
    ii. 80% of the first luminescent pigment and 20% of the at least second luminescent pigment,
    iii. 70% of the first luminescent pigment and 30% of the at least second luminescent pigment,
    iv. 60% of the first luminescent pigment and 40% of the at least second luminescent pigment,
    v. 50% of the first luminescent pigment and 50% of the at least second luminescent pigment,
    vi. 40% of the first luminescent pigment and 60% of the at least second luminescent pigment,
    vii. 30% of the first luminescent pigment and 70% of the at least second luminescent pigment,

viii. 20% of the first luminescent pigment and 80% of the at least second luminescent pigment,

ix. 10% of the first luminescent pigment and 90% of the at least second luminescent pigment,

x. 99.9% of the first luminescent pigment and 0.1 % of the at least second luminescent pigment,

xi. 99.8% of the first luminescent pigment and 0.2% of the at least second luminescent pigment,

xii. 99.7% of the first luminescent pigment and 0.3% of the at least second luminescent pigment,

xiii. 99.6% of the first luminescent pigment and 0.4% of the at least second luminescent pigment,

xiv. 99.5% of the first luminescent pigment and 0.5% of the at least second luminescent pigment,

xv. 99.4% of the first luminescent pigment and 0.6% of the at least second luminescent pigment,

xvi. 99.3% of the first luminescent pigment and 0.7% of the at least second luminescent pigment,

xvii. 99.2% of the first luminescent pigment and 0.8% of the at least second luminescent pigment,

xviii. 99.1 % of the first luminescent pigment and 0.9% of the at least second luminescent pigment.

At least one technical effect of this further optional embodiment is that the luminescent pigments have a different decay behavior. This leads to different unique luminescent materials which can be dominated by a fast luminescent pigment or by a slow luminescent pigment.

In a further optional embodiment, the first identification time, the second identification time and the third identification time having each a value out of at least one of the following ranges:

i. 50 $\mu$s and 3000 $\mu$s,

ii. 50 $\mu$s and 2500 $\mu$s,

iii. 50 $\mu$s and 2000 $\mu$s,

iv. 50 $\mu$s and 1500 $\mu$s,

v. 50 $\mu$s and 1000 $\mu$s,

vi. 100 $\mu$s and 950 $\mu$s,

vii. 150 $\mu$s and 900 $\mu$s,

viii. 200 $\mu$s and 850 $\mu$s,

ix. 250 $\mu$s and 800 $\mu$s,

x. 300 $\mu$s and 750 $\mu$s,

xi. 350 $\mu$s and 700 $\mu$s,

xii. 400 $\mu$s and 650 $\mu$s,

xiii. 450 $\mu$s and 600 $\mu$s,

xiv. 500 $\mu$s and 550 $\mu$s.

At least one technical effect of this further optional embodiment is that the luminescent material has a more unique decay behavior which enables a more reliable identification of construction products.

In a further optional embodiment, the luminescent material is mixed into the construction product and/or is applied onto the surface of the construction product.

In a further optional embodiment, the amplifier is an essentially logarithmic amplifier.

At least one technical effect of this further optional embodiment is that a wide range of input currents is converted into a narrow range of output voltages. This allows a precise compensation of a wide intensity range of background light.

In a further optional embodiment, the electric signal is a current signal or a voltage signal.

In a further optional embodiment, the photodetector is a photodiode or a phototransistor.

In a further optional embodiment, the method comprising a further step of:

-　amplifying the fluorescent light signal of the luminescent material by an amplifier.

In order to facilitate better understanding of the present invention, reference is made below to the drawings. These show only exemplary embodiments of the subject matter of the invention. These embodiments, offered not to limit but only to exemplify and teach the invention, are shown and described in sufficient detail to enable those skilled in the art to implement or practice the invention. Thus, where appropriate to avoid obscuring the invention, the description may omit certain information known to those of skill in the art.

In the figures and the associated description, identical or functionally analogous parts are provided with the same reference numerals.

The invention also encompasses individual features shown in the figures, even if they are shown there in connection with other features and/or are not mentioned above. Further, the term "comprising" and derivatives thereof do not exclude other elements or steps. Likewise, the indefinite article "a" or "one" and derivatives thereof do not exclude a plurality. The functions of multiple features recited in the claims may be performed by a single unit. The terms "substantially", "approximately", "about" and the like in connection with a characteristic or a value define, in particular, also exactly the characteristic or exactly the value. All reference signs in the claims are not to be understood as limiting the scope of the claims.

Figure 1 shows a first embodiment of a first emission intensity of a first luminescent pigment and a second emission intensity of a second luminescent pigment.

Figure 2 shows a first embodiment of a combined emission intensity of a luminescent material comprising a mix of a first luminescent pigment and a second luminescent pigment.

Figure 3 shows a second embodiment of combined emission intensities plotted in a $\tau_2$ -$\tau_1$- diagram and comprising mixes of a first luminescent pigment with temperature dependencies.

Figure 4 shows a first embodiment of an identification system in a working tool.

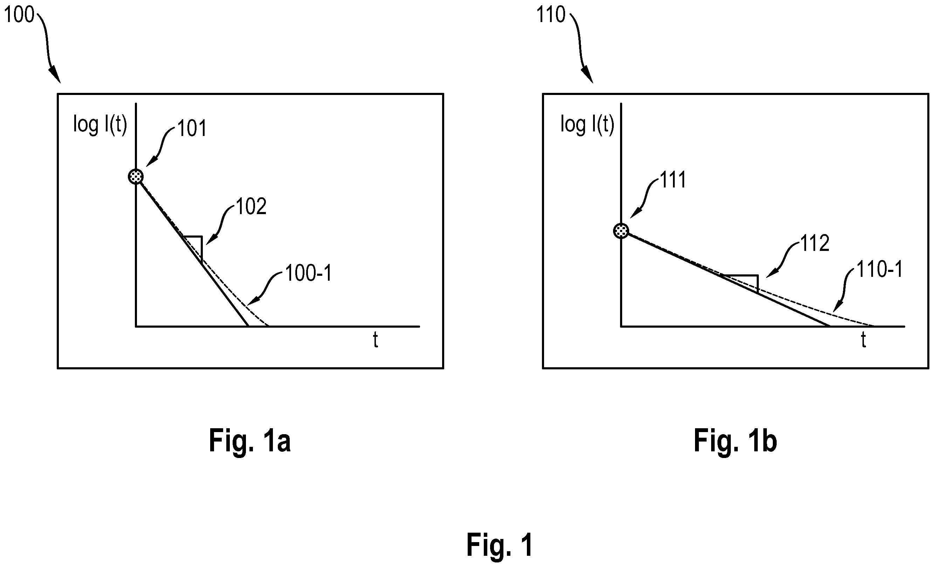

**Figure 1** shows a first embodiment of a first emission intensity 100 of a first luminescent pigment (Figure 1a) and a second emission intensity 110 of a second luminescent pigment (Figure 1b).

Figure 1a shows that the first luminescent pigment has a first emission intensity 100 comprising a first initial emission intensity 101 and a first gradient 102. The negative inverse of the first gradient 102 of the first emission intensity 100 is considered as the "first decay time constant". Figure 1a is log-lin diagram, and the first emission intensity 100 follows an inclined linear curve. The curve 100-1 shows an example of a stretched-exponential decay behavior.

Figure 1b shows that the second luminescent pigment has a second emission intensity 110 comprising a second initial emission intensity 111 and a second gradient 112. The negative inverse of the second gradient 112 of the second emission intensity 110 is considered as the "second decay time constant". Figure 1b is log-lin diagram, and the second emission intensity 110 follows an inclined linear curve.

The second initial emission intensity 111 is lower compared to the first initial emission intensity 101. This results in a less bright luminescent behavior of the second luminescent pigment compared to the first luminescent pigment.

Moreover, the first gradient 102 is steeper than the second gradient 112. This results in a smaller first decay time constant of the first luminescent pigment compared to the second decay time constant of the second luminescent pigment. In other words, the first pigment has a faster decay behavior than the second pigment. Hence, the first pigment is considered a "fast" pigment and the second pigment is considered a "slow" pigment. The curve 110-1 shows an example of a stretched-exponential decay behavior.

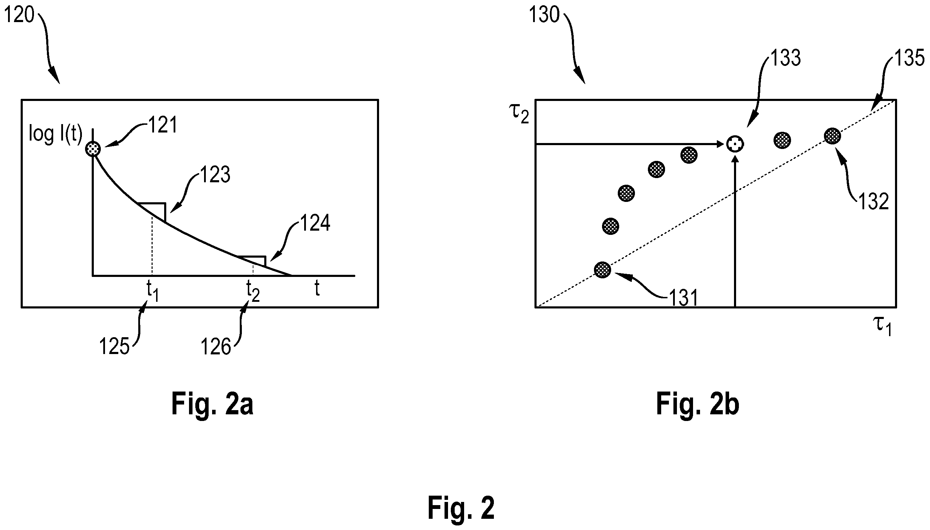

**Figure 2** shows a first embodiment of a combined emission intensity 120 of a luminescent material comprising a mix of a first luminescent pigment and a second luminescent pigment.

Figure 2a shows that the luminescent material has a combined emission intensity 120 comprising a combined initial emission intensity 121 and a combined gradient.

Figure 2a shows further that at the first identification time $t_1$ 125 a first combined gradient 123 is determined. The negative inverse of the first combined gradient 123 of the combined emission intensity 120 is considered the first combined decay time constant $\tau_1$ at the first identification time $t_1$ 125.

Figure 2a shows further that at the second identification time $t_2$ 126 a second combined gradient 124 is determined. The negative inverse of the second combined gradient 124 of the combined emission intensity 120 is considered the second combined decay time constant $\tau_2$ at the second identification time $t_2$ 126.

In this embodiment the first identification time $t_1$ 125 has a value of 250 μs and the second identification time $t_2$ 126 has a value of 450 μs.

Figure 2b shows the same luminescent material 133 plotted in a $\tau_2$ - $\tau_1$ - diagram. Figure 2b comprises further an angle bisector 135 and 8 specific luminescent materials (shown as 8 circles).

The luminescent material 131 comprises only the first luminescent pigment with a first decay time constant. Said first decay time constant is equal to the first combined decay time constant $\tau_1$ and to the second combined decay time constant $\tau_2$. Due to this the luminescent material 131 intersects with the angle bisector 135.

The luminescent material 132 comprises only the second luminescent pigment with a second decay time constant. Said second decay time constant is equal to the second combined decay time constant $\tau_2$ and to the first combined decay time constant $\tau_1$. Due to this the luminescent material 132 intersects with the angle bisector 135. The remaining six luminescent materials comprising a mix between the first luminescent piment and the second luminescent pigment.

The beauty of the $\tau_2$ - $\tau_1$ - diagram is that each mix of the first luminescent pigment and the second luminescent pigment can clearly be distinguished from each other. In other words, due to first combined decay time constant $\tau_1$ and the second combined decay time constant $\tau_2$, every mix ratio of the first luminescent pigment and the second luminescent pigment can be well identified.

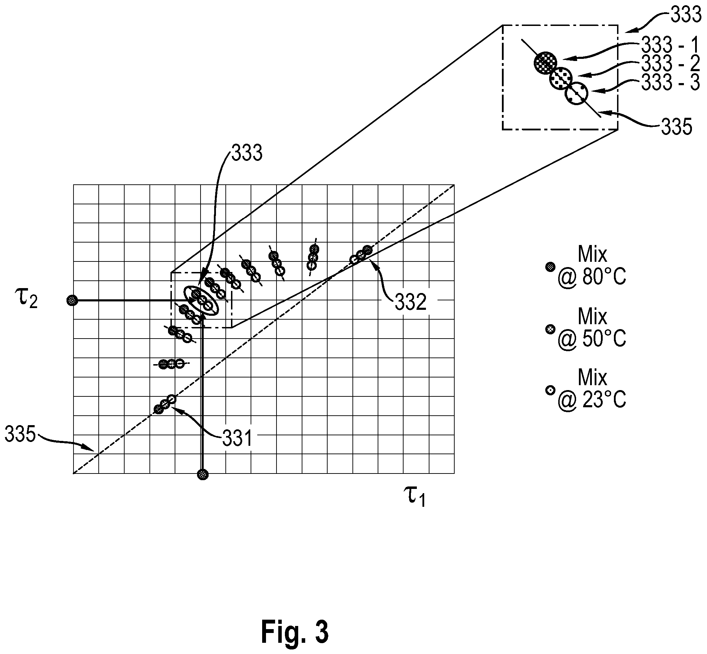

**Figure 3** shows a second embodiment of combined emission intensities plotted in a $\tau_2$-$\tau_1$ - diagram and comprising mixes of a first luminescent pigment with temperature dependencies.

Figure 3 shows a second embodiment of a several combined emission intensities plotted on a $\tau_2$ - $\tau_1$ - diagram. Figure 3b comprises an angle bisector 335 and 11 specific luminescent materials.

The luminescent material 331 comprises only the first luminescent pigment with a first decay time constant. Said first decay time constant is equal to the first combined decay time constant $\tau_1$ and to the second combined decay time constant $\tau_2$. Due to this, the luminescent material 331 intersects with the angle bisector 335.

The luminescent material 332 comprises only the second luminescent pigment with a second decay time constant. Said second decay time constant is equal to the second combined decay time constant $\tau_2$. and to the first combined decay time constant $\tau_1$ Due to this the luminescent material 332 intersects with the angle bisector 335.

The remaining nine luminescent materials comprising a mix between the first luminescent piment and the second luminescent pigment.

Figure 3 further shows that for every pigment mix the combined emission intensities are temperature-dependent but still distinguishable. This behavior is explained in the following based on the luminescent material 333.

Figure 3 shows a zoom-in of the luminescent material 333. Depending on temperature, the luminescent material 333 shows slightly different combined decay time constants 333-1, 333-2, 333-3 resulting in different coordinates within the $\tau_2$ - $\tau_1$ - diagram. The combined decay time constants 333-1, 333-2, 333-3 are all located on a luminescent specific temperature dependency curve 335. In other words, every luminescent material within the scope of this invention has a specific temperature dependency curve.

Figure 3 further shows, that even considering the temperature dependency, no luminescent material falls in the detection area of another luminescent material. In other words, based on the first combined decay time constant $\tau_1$ and the second combined decay time constant $\tau_2$, every mix ration of the first luminescent pigment and the second luminescent pigment can be well identified at any of the depicted temperatures.

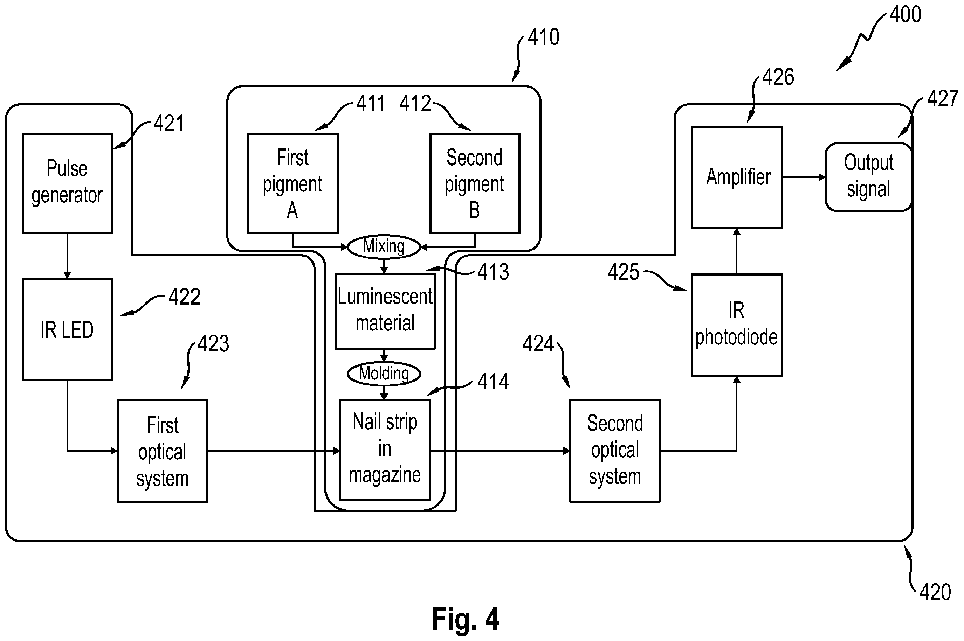

**Figure 4** shows a first embodiment of an identification system 400 in a working tool. The identification system 400 comprises a luminescent unit 410 and an opto-electronic unit 420 both being comprised by the working tool.

The luminescent unit 410 in this embodiment comprises a first pigment 411 and a second pigment 412. Said pigments are mixed form the luminescent material 413. Said luminescent material 413 is molded on a nail strip 414 configured for the use in a magazine of a setting device.

The opto-electronic unit 420 comprises a pulse generator 421 configured to generate a pulsed light from the IR LED 422. Said pulsed light is emitted by the IR LED 422 through a first optical system 423, which concentrates the pulsed light on the nail strip 414. The pulsed light excites the luminescent material 413 on the nail strip 414 such that the luminescent material 413 emits fluorescent light. Said fluorescent light is collected by a second optical system 424 and received by an IR photodiode 425. An analog amplifier 426 compensates background light and outputs an output signal 427.

**Claims**

1. Luminescent material for identification of construction products comprising a mix of

   - a first luminescent pigment and at least a second luminescent pigment,

     - wherein the first luminescent pigment having a first emission intensity comprising a first initial emission intensity and a first decay time constant,
     - wherein the at least second luminescent pigment having a second emission intensity comprising a second initial emission intensity and a second decay time constant,

   - at least one mix ratio of the first luminescent pigment and the at least second luminescent pigment,

     - wherein the at least one mix ratio having a combined emission intensity comprising a combined initial emission intensity and a combined decay time constant,
     - wherein the combined decay time constant is time dependent.

2. Luminescent material according to the previous claims **characterized in that**, the first emission intensity and the second emission intensity are each described by an exponential function:

$$I(t) = I_0 \cdot e^{-(t/\tau)^\beta},$$

   - wherein $I_0$ is an initial emission intensity, preferably the first initial emission intensity or the second initial emission intensity,
   - wherein t is the time,
   - wherein $\tau$ is a decay time constant, preferably the first decay time constant or the second decay time constant,
   - wherein $\beta$ is a stretching exponent, preferably a first stretching constant $\beta_1$ related to the first luminescent pigment or a second stretching constant $\beta_2$ related to the second luminescent pigment.

3. Luminescent material according to the previous claim, **characterized in that** the stretching exponent $\beta$ having at least one value between 0.7 and 1.0 and/or at least one value between 0.7 and 0.99.

4. Luminescent material according to the previous claims, **characterized in that** the at least one mix ratio having a first combined decay time constant at a at least first identification time.

5. Luminescent material according to the previous claims, **characterized in that** the at least one mix ratio having a first combined decay time constant at a first identification time and a second combined decay time constant at a at least second identification time.

6. Luminescent material according to the previous claims, **characterized in that** the at least one mix ratio having a first combined decay time constant at a first identification time, a second combined decay time constant at a second identification time and a third combined decay time constant at a at least third identification time.

7. Construction product comprising a luminescent material according to one of the claims 1 to 6.

8. Construction product according to the previous claim **characterized in that**, the construction product is at least one of the following:

> a. a strip of collated nails or a single nail,
> b. a strip of collated screws or a single screw,
> c. a strip of collated threaded stud or a single threaded stud,
> d. a single or collated cartridge for a powder actuated tool,
> e. an exchangeable battery,
> f. a gas can,
> g. a welding stud,
> h. an insert tool for a working tool, preferably a screw bit, a drill bit, a core bit, or a saw blade,
> i. a chemical product, preferably a mortar or a component of a chemical anchor,
> j. a fire protection product, preferably a firestop foam or a fire-resistant brick,
> k. a mechanical anchor.

9. Working tool configured for identification of construction products, comprising an identification system, wherein said identification system comprising

> - at least one light source for emitting modulated light on a luminescent material and exciting said luminescent material,
> - a detector, comprising a photodetector for receiving and transforming an optical signal of a fluorescent light of the luminescent material into an electric signal.

10. Working tool according to the previous claim, **characterized in that** the modulated light of the light source and/or the fluorescent light of the luminescent material having a wavelength between 400 nm and 2500 nm.

11. Working tool according to the previous claims 9 to 10 **characterized in that**, the working tool further comprises a temperature sensor essentially adjacent to a construction material comprising or marked with the luminescent material.

12. Method for identifying construction products, comprising the steps of:

> - emitting modulated light by a light source on a luminescent material,
> - emitting a fluorescent light signal by the luminescent material,
> - measuring the fluorescent light signal of the luminescent material,
> - determining at a at least first identification time, a first combined decay time constant of the fluorescent light signal,
> - comparing the first combined decay time constant with a first combined target decay time constant.

13. Method according to the previous claim, **characterized in that** the method comprising further the steps of

> - determining at a at least second identification time, a at least second combined decay time constant of the fluorescent optical signal and,
> - comparing the at least second combined decay time constant with a at least second combined target decay time constant.

14. Method according to the previous claims 12 and 13, **characterized in that** the method comprising a further step of:

> - compensating an electric signal of an amplifier by considering a background light signal, wherein the electrical signal of the amplifier is related to the fluorescent light signal.

15. Method according to the previous claims 12 to 14, **characterized in that** the method comprising the further step of:

> - correcting the first combined target decay time constant by considering a known temperature dependency.

Fig. 1a

Fig. 1b

Fig. 1

EP 4 763 947 A1

**Fig. 2a**

**Fig. 2b**

**Fig. 2**

EP 4 763 947 A1

**Fig. 3**

**Fig. 4**

EP 4 763 947 A1

## EUROPEAN SEARCH REPORT

Application Number

EP 24 22 1270

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 046 486 B2 (CARR PAUL A [US]; CONROY JEFFREY L [US] ET AL.) 2 June 2015 (2015-06-02) * claims 1-20 * | 1-15 | INV. C09K11/08 G01N21/64 |
| X | US 2020/071610 A1 (LAU CARSTEN [DE] ET AL) 5 March 2020 (2020-03-05) * paragraph [0026]; claims 1-20 * | 1-15 | |

**TECHNICAL FIELDS SEARCHED (IPC)**

C09K
G01N

The present search report has been drawn up for all claims

| Place of search | Date of completion of the search | Examiner |
|---|---|---|
| The Hague | 15 April 2025 | Mehdaoui, Imed |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 22 1270

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2025

| Patent document cited in search report | | Publication date | Patent family member(s) | | Publication date |
|---|---|---|---|---|---|
| US 9046486 | B2 | 02-06-2015 | NONE | | |
| US 2020071610 | A1 | 05-03-2020 | CN | 112703242 A | 23-04-2021 |
| | | | EP | 3844246 A1 | 07-07-2021 |
| | | | JP | 7150143 B2 | 07-10-2022 |
| | | | JP | 2021535260 A | 16-12-2021 |
| | | | KR | 20210038979 A | 08-04-2021 |
| | | | US | 2020071610 A1 | 05-03-2020 |
| | | | WO | 2020047055 A1 | 05-03-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9046486 BB